# EUROPEAN PATENT SPECIFICATION

(11) **EP 4 271 175 B1**
(45) Date of publication and mention of the grant of the patent: **23.09.2026**
(21) Application number: 21835883.6
(22) Date of filing: 21.12.2021
(51) Int. Cl.: A01J 5/007, A01J 5/04

(54) **MILKING SYSTEM**
MELKSYSTEM
SYSTÈME DE TRAITE

(30) Priority: 31.12.2020 SE 2051578
(43) Date of publication of application: 08.11.2023
(73) Proprietor: DeLaval Holding AB, 147 21 Tumba (SE)
(72) Inventor: BERTILSSON, Anders, 147 21 Tumba (SE)
(74) Representative: DeLaval International AB
(86) International application number: PCT/SE2021/051299
(87) International publication number: WO 2022/146221

(56) References cited:
- EP-A2- 1 369 029
- WO-A1-2012/022356
- WO-A1-2017/190196
- WO-A1-2019/156619
- US-A1- 2008 127 896
- US-A1- 2009 177 418

## Description

### TECHNICAL FIELD

The invention refers to a milking system comprising a plurality of teat cups, a plurality of milk evacuation tubes, a vacuum pump, a milk tank, a plurality of vacuum regulators, a plurality of vacuum pressure sensors, an animal identification sensor, a database and a processing device for controlling a teat specific vacuum pressure level to be applied at each respective teat of an animal during a milking session.

### BACKGROUND

On a dairy farm, milk is typically extracted from the animals by attaching a teat cup with a liner on each teat of the animal and apply milking vacuum under the tip of the teat, in addition to a pulsation vacuum. Hereby, the rhythmical suckling of a calf is imitated so that sucking by the milking vacuum is interrupted by rhythmical motions, opening and closing of the liner caused by the pulsation vacuum. Consequently, the teats are exposed to massage which stimulates oxytocin release of the animal, which in turn activates the milk ejection reflex, resulting in milk release of alveoli milk about 40-60 seconds after attachment of the first teat cup onto the first teat. Also, congestion in the teat end is prevented by the applied massage.

It is desired to evacuate the milk from the animal as fast as possible (for using the milking equipment efficiently and allowing a maximum number of animals to be milked) while avoiding injury on the teats due to excessive milking vacuum.

However, the milk flow of the teats of an animal is typically not equally distributed between the teats, for different reasons, e.g., genetic variations and/ or that a teat may have a deviating size/ shape making it less suitable for the applied teat cup/ liner (the same teat cup/ liner size is typically applied on all the teats independently of the actual teat size).

Not only the milk flow is unequally distributed, but also the increase rate of the milk flow during stimulation of the respective teat is different. Milk flow per time unit may be different for all teats of the animal during a milking session.

It has been observed that at least some animals do not release milk at a higher milk flow even when the milking vacuum is increased radically, why an increased applied milking vacuum of animal teats, for these animals, only lead to exposing the teats for the high milking vacuum, which may harm the teat.

These above-mentioned features may coincide and enforce each other, which exacerbates the problems.

It would be desired through further investigations and development to evolve a concept for improved milk evacuation in terms of time and efficiency while ensuring and/ or enhancing a satisfying teat integrity.

EP1369029A2 discloses a milking system according to the preamble of claim 1, wherein the milking intensity is controlled during at least a part of the milking of each udder quarter in such a way that all udder quarters will be milked out according to a predetermined chronological order.

### SUMMARY

It is therefore an object of this invention to solve at least some of the above problems and improve milking of an animal within a milking system.

According to a first aspect of the invention, this objective is achieved by a milking system.

The milking system according to claim 1 comprises a plurality of teat cups, each configured to fit on a respective teat of an animal during milk extraction in a milking session. The milking system also comprises a plurality of milk evacuation tubes, wherein each milk evacuation tube is connected to a respective teat cup. In addition, the milking system comprises a vacuum pump, configured to generate a vacuum pressure, which may be referred to as system vacuum. The milking system furthermore comprises a milk tank, connected to each of the teat cups via the respective connected milk evacuation tube, and also connected to the vacuum pump. Also, the milking system comprises a plurality of vacuum regulators wherein each vacuum regulator is associated with one teat cup, and configured to control a vacuum pressure level prevailing in the associated teat cup, under the teat. The milking system comprises a plurality of vacuum pressure sensors wherein each vacuum pressure sensor is associated with one teat cup and configured to measure vacuum pressure level prevailing in the associated teat cup under one of the teats during milk extraction of the milking session. In addition, the milking system comprises an animal identification sensor configured to capture animal-unique information of the animal. The milking system furthermore comprises a database configured to store data related to at least one earlier milking session of each respective teat of the animal, associated with an identity reference of the animal. The milking system also comprises a processing device, communicatively connected to the vacuum regulators, the vacuum pressure sensors, the animal identification sensor and the database. The processing device is configured to determine an identity reference of the animal to be milked, based on animal-unique information obtained from the animal identification sensor. The processing device is also configured to extract data of each respective teat of the identified animal from the database based on the determined identity reference. Furthermore, the processing device is configured to determine a teat specific vacuum pressure level to be applied at each respective teat at a time-period from beginning of the milking session, when the teat cup is attached to the respective teat, based on the extracted data. The processing device is in addition configured to generate a respective command to each vacuum regulator, to set the determined teat specific vacuum pressure level at each respective teat cup.

By measuring the respective vacuum pressure level under each teat and comparing it with a previously stored teat specific vacuum pressure level applied to each respective teat, the processing device may set the vacuum pressure level at each teat cup by generating a respective command to the corresponding vacuum regulator associated with the teat cup. The teat specific vacuum pressure level could thus be tailored to a level which secures teat integrity while enabling a high vacuum pressure level for teats having a high milk flow.

Thereby, by adapting the teat specific vacuum pressure level to the milk flow of each individual teat, milk extraction is radically improved. The total milking time of each animal being served in a milking station/ milking robot (in comparison with conventional solutions) is reduced which makes it possible to serve more animals per time unit at the milking system. Yet, milking is performed in a gentle manner, eliminating, or at least reducing inconvenience of the animal caused by excessive vacuum pressure under the teats. Excessive vacuum pressure may cause injuries which in turn may encourage udder diseases such as mastitis, which may have severe economical consequences of the farm, besides the suffering of the individual animal.

In an implementation of the milking system according to the first aspect, the milking session begins either when a pre-treatment is performed on the first teat, or when the first teat cup is applied to the first teat.

By defining a particular moment in time when the milking session begins, a distinct and unambiguous fixed point is established, which facilitates calculations and control of the processing device.

According to the invention, the processing device is configured to determine a vacuum profile to be applied to each respective teat of the animal during the milking session, based on the extracted data. The processing device is also configured to generate a respective command to each vacuum regulator, to control the respective vacuum pressure level prevailing at each associated teat cup under the teat, according to the corresponding vacuum profile of the respective teat.

The applied teat specific vacuum pressure level may thereby be adapted to a milk flow of a teat which is varying over time during the milking session, leading to application of an as high vacuum pressure level as could be tolerated by the milk flow of the teat. The total time of the milking session could thereby be additionally reduced, while not abusing the teats by excess vacuum.

In yet an implementation of the milking system but not according to the invention, the vacuum profile comprises a constant vacuum pressure level under the teat, which vacuum pressure level is to be maintained during the milking session.

According to the invention, the vacuum profile comprises vacuum pressure levels under the teat, which vacuum pressure levels varies over time during the milking session.

In yet an implementation of the milking system according to the first aspect, the milking system comprises a communication device for communication with a central processing device of a service provider. The processing device is configured to provide data of the animal and/ or the identity reference of the animal to the central processing device of the service provider via the communication device. The processing device is also configured to obtain the vacuum profile to be applied for each respective teat of the animal during the milking session from the central processing device.

By making the computations and/ or data storage on a central unit instead of keeping the processing capacity locally at the farm, several advantages are achieved. The farmer does not have to bother concerning program updates and computer security issues. Program updates due to recent developments and innovation of the service provider may instantly be implemented at the central processing unit.

In yet an implementation of the milking system according to the first aspect, the processing device is configured to continuously obtain a respective vacuum pressure level under each of the teats, from the corresponding vacuum pressure sensor during the milking session. The processing device is configured to compare the obtained respective vacuum pressure levels with the respective vacuum profile. In addition, the processing device is also configured to, if the obtained vacuum pressure level differs from the vacuum pressure level of the vacuum profile, generate a respective command to each vacuum regulator, to adjust the respective vacuum pressure level at each teat cup, according to the corresponding vacuum profile of the respective teat.

Thus, a continuous surveillance and adjustment of the applied vacuum pressure level at each teat is achieved, enabling an uninterrupted monitoring and setting of teat specific vacuum pressure level.

In yet an implementation of the milking system according to the first aspect, the teat cup comprises a liner, which is caused to open and close repeatedly under the teat during the milking session; and wherein the vacuum pressure sensor is configured to measure the vacuum pressure level at least two times during a time period when the liner is open.

By being able to measure the vacuum pressure level frequently, at least when the liner is open and the teat is exposed to the vacuum, a better control of the current/ instantaneous vacuum pressure is achieved. It also becomes possible to detect a change rate in milk flow. A large difference between two measurements, in case of either quick increase/ decrease in milk flow may trigger that the vacuum pressure level may be changed in larger steps than when a small difference is detected. An adaptation of the applied vacuum pressure level may then be made via the vacuum regulator associated with the teat cup. It thereby becomes possible to provide each teat with an appropriate vacuum pressure level for time-efficient milking while avoiding vacuum caused damages or irritation of the teats.

In yet an implementation of the milking system according to the first aspect, the vacuum pressure sensor is configured to measure vacuum pressure level with substantially 10-1000 measurements per second, preferably 100-1000 measurements per second.

The more frequently the vacuum pressure level under each teat is measured, the more precise fine tuning of the applied vacuum pressure level could be made for maintaining the determined teat specific vacuum pressure level also when there are deviations in the milk flow of the animal in comparison with earlier milking sessions.

In yet an implementation of the milking system according to the first aspect, the processing device is configured to calculate a rolling average of vacuum pressure levels prevailing at each teat cup under the respective teat, based on a predetermined number of latest vacuum pressure levels obtained from the respective associated vacuum pressure sensor. The comparison with the vacuum profile is made with the calculated rolling average of vacuum pressure levels.

The calculated rolling average of for example the latest 5 or 10 measured vacuum pressure levels evens out arbitrary fluctuations in the measurements, resulting in a more reliable and stable comparison with the vacuum profile/ determined teat specific vacuum pressure level.

In yet an implementation of the milking system but not according to the invention, the processing device is configured to repeatedly, generate a command to the vacuum regulator associated with the teat cup applied to the respective teat, to either increase the vacuum pressure level under the teat with a step when the latest obtained vacuum pressure level under the teat, obtained from the vacuum pressure sensor is lower than a previously obtained vacuum pressure level under the teat. Or, to decrease the vacuum pressure level under the teat with the step when the latest obtained vacuum pressure level under the teat, obtained from the vacuum pressure sensor exceeds the previously obtained vacuum pressure level under the teat. Thereby the vacuum pressure level could be adapted in real time. By comparing two subsequent measurements of vacuum pressure levels, a rate of change could be determined which is indicating direction and size of the subsequent vacuum pressure level.

In yet an implementation of the milking system but not according to the invention, the size of the step is proportional to a difference between the latest obtained vacuum pressure level and the previously obtained vacuum pressure level, such as for example the penultima obtained vacuum pressure level.

By instructing the vacuum regulator to change the vacuum pressure in a step size which may be proportional to the detected difference between the measurements, it is avoided that an inappropriate vacuum pressure level is applied to the teat, which does not match the current milk flow.

In yet an implementation of the milking system according to the first aspect, the processing device is configured to detect that the vacuum pressure level under one of the teats exceeds a maximum allowed vacuum pressure level, based on a measurement of the vacuum pressure level obtained from the vacuum pressure sensor associated with the teat cup attached to the teat. The processing device is also configured to generate a command to the vacuum regulator associated with the teat cup attached to the teat, to decrease the vacuum pressure level under the teat.

It is hereby avoided that a teat is exposed for an excessive vacuum pressure in case the milk flow of the teat is not corresponding to the applied vacuum pressure. Thereby a gentle treatment of the teat of the animal is ascertained yet enabling application of an efficient vacuum pressure adapted to the teat capacity which ameliorates and streamline the milking session, as the milk thereby is evacuated in short time while not abusing teat integrity of the animal.

In yet an implementation of the milking system according to the first aspect, the processing device is configured to provide data related to the latest milking session of each respective teat of the identified animal, to the database, for storage therein, associated with the specific teat, the identity reference of the animal and a time reference.

The stored data may be different in different implementations and comprise milk production of each teat of the animal, a vacuum profile to be followed during the milking session, and/ or an initial teat specific vacuum pressure level to be applied at least during beginning of the milking session. By continuously updating the stored data, development in milk yield over the lactation cycle of the animal is compensated for and may even be predicted.

In yet an implementation of the milking system according to the first aspect, the processing device is configured to detect a difference between previously stored data related to at least one milking session of one teat of the animal and corresponding data related to the latest milking session of the teat exceeding a threshold limit. Also, the processing device is configured to generate an alert to be output when the difference is detected.

In case the deviation in outcome between two milking sessions, either in milk yield or applied vacuum pressure, is too large (i.e., exceeding the threshold limit) the reason may be that the animal is suffering from mastitis, infection or some other disease and may require appropriate professional treatment. By detecting a disease and commence treatment early, the animal is likely to recover earlier, reducing the period of illness of the animal.

In yet an implementation of the milking system according to the first aspect, the processing device is configured to determine a time period between the last milking session of the animal and the current moment in time when the animal is about to commence the subsequent milking session. The processing device is configured to determine the teat specific vacuum pressure level to be applied at each respective teat also based on the determined time period.

By adjusting the determined teat specific vacuum pressure level and/ or vacuum profile based on the time period, a vacuum pressure level and/ or vacuum profile which is more corresponding to an expected milk flow of the animal is provided.

Hereby, a time efficient, yet teat friendly milk extraction is provided.

Other advantages and additional novel features will become apparent from the subsequent detailed description.

### FIGURES

Embodiments of the invention will now be described in further detail with reference to the accompanying figures, in which:
- **Figure 1**: illustrates a milking system according to an embodiment.
- **Figure 2**: illustrates a milking system according to an embodiment.
- **Figure 3**: illustrates details of a milking system concerning a teat cup provided with a liner according to an embodiment.
- **Figure 4A**: is a diagram that illustrates an example of milk flow per time unit and vacuum profile for a first teat during milk extraction.
- **Figure 4B**: is a diagram that illustrates an example of milk flow per time unit and vacuum profile for a second teat during milk extraction.
- **Figure 4C**: is a diagram that illustrates an example of milk flow per time unit and vacuum profile for a third teat during milk extraction.
- **Figure 4D**: is a diagram that illustrates an example of milk flow per time unit and vacuum profile for a fourth teat during milk extraction.
- **Figure 5**: is a diagram that illustrates an example of milk flow per time unit and vacuum profile for a teat during milk extraction.

### DETAILED DESCRIPTION

Embodiments of the invention described herein are defined as a milking system, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

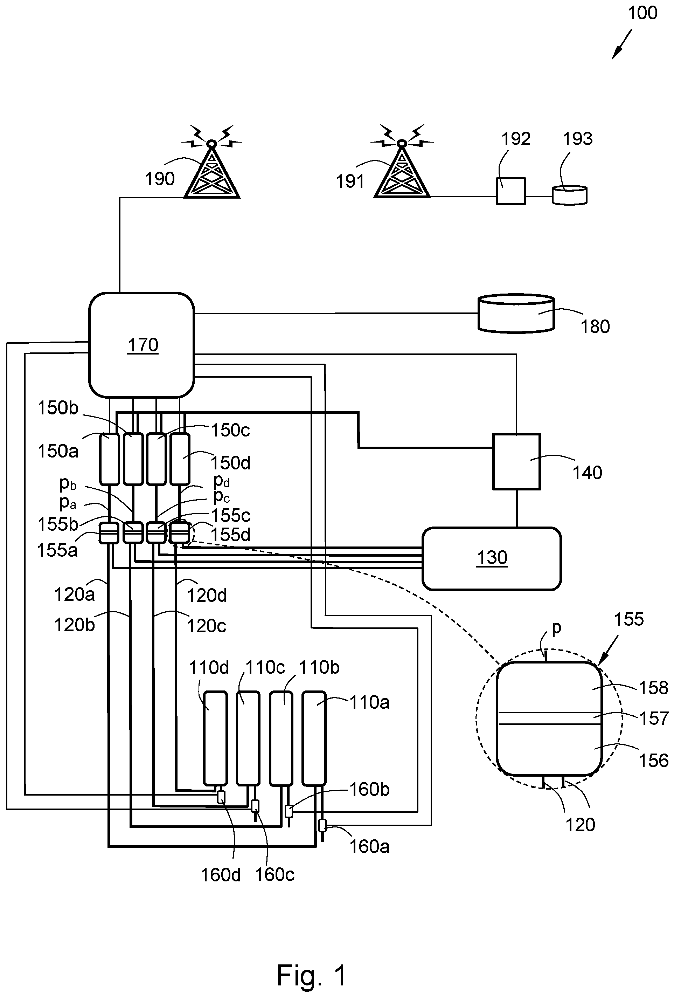

Figure 1 illustrates a milking system 100 configured to extract milk from an animal during a milking session. The animal may be comprised in a herd of animals for dairy farming at a farm. The milking system 100 may with advantage, although not necessarily, be implemented in an automatic milking facility, for example a milking robot, which is arranged for voluntary milking of freely strolling animals, wherein the animals may visit the milking facility/ milking system 100 in order to be milked when desired.

"Animal" may be any arbitrary type of domesticated female mammal such as e.g. cow, goat, sheep, camel, horse, dairy buffalo, donkey, yak, etc. The animal may have four teats, as for example cows, or two teats, such as for example goats and/ or sheep (non-exhaustive list). Other animals may have other numbers of teats.

The milking system 100 comprises a plurality of teat cups 110a, 110b, 110c, 110d. The number of teat cups 110a, 110b, 110c, 110d is typically identical with the number of teats of the animal to be milked within the milking system 100. Each teat cup 110a, 110b, 110c, 110d is configured to fit on a respective teat of the animal and to be attached thereto during milk extraction in the milking session.

Each teat cup 110a, 110b, 110c, 110d is connected to a respective milk evacuation tube 120a, 120b, 120c, 120d, leading evacuated milk from the respective teat, to a connected milk tank 130. The milk tank 130 is in turn connected to a vacuum pump 140 that has generated and/ or continuously generates a system vacuum pressure of the milk tank 130. The system vacuum pressure may be for example somewhere between about 48-55 kPa.

The expressions "vacuum pressure" and/ or "milking vacuum" and/ or "system vacuum pressure" refers to under-pressure in comparison with the environmental atmospheric pressure,

The milk tank 130 may collect milk evacuated during the milking session, which may be forwarded via a pump arrangement and a tubing, to a connected cooling tank where the milk may be collected and maintained at chilled temperature.

The milking system 100 also comprises a plurality of vacuum regulators 150a, 150b, 150c, 150d. The vacuum pump 140 is connected to each vacuum regulator 150a, 150b, 150c, 150d, thereby providing system vacuum to the vacuum regulators 150a, 150b, 150c, 150d.

Each vacuum regulator 150a, 150b, 150c, 150d comprises a solenoid wherein position of a valve of the solenoid may be adjusted by adjusting a magnetic field surrounding the solenoid for example with a Pulse Width Modulation (PWM) signal generated by a processing device 170 communicatively connected to the vacuum regulators 150a, 150b, 150c, 150d, thereby changing a mixture of system vacuum of the vacuum pump 140 and air of atmospheric pressure for generating a control vacuum p.

The vacuum regulators 150a, 150b, 150c, 150d may comprise or be connected to a respective valve device 155a, 155b, 155c, 155d. The valve device 155a, 155b, 155c, 155d is arranged in the respective milk evacuation tube 120a, 120b, 120c, 120d, associated with the respective teat cup 110a, 110b, 110c, 110d.

The valve device 155a, 155b, 155c, 155d comprises a wet section 156 and a dry section 158, separated by a membrane 157. The milk evacuation tube 120a, 120b, 120c, 120d is passing the wet section 156 of the valve device 155a, 155b, 155c, 155d.

The vacuum pressure level prevailing in the teat cup 110a, 110b, 110c, 110d associated with the milk evacuation tube 120a, 120b, 120c, 120d, upstreams the valve device 155a, 155b, 155c, 155d is adjusted to the same vacuum level as the control vacuum level p provided to the dry section 158 of the valve device 155a, 155b, 155c, 155d by the vacuum regulator 150a, 150b, 150c, 150d.

Thus, the vacuum pressure level prevailing in the teat cup 110a, 110b, 110c, 110d under the teat may be adjusted individually.

The valve device 155a, 155b, 155c, 155d may for example comprise a per se known shut off valve.

In addition, the milking system 100 comprises a plurality of vacuum pressure sensors 160a, 160b, 160c, 160d. Each vacuum pressure sensor 160a, 160b, 160c, 160d is associated with one teat cup 110a, 110b, 110c, 110d and is configured to measure vacuum pressure level prevailing in the associated teat cup 110a, 110b, 110c, 110d under one of the teats during milk extraction of the milking session. Thus, one vacuum pressure sensor 160a, 160b, 160c, 160d may be dedicated to measuring vacuum pressure level prevailing in one specific teat cup 110a, 110b, 110c, 110d under one of the teats.

The milking system 100 furthermore comprises a database 180 configured to store data related to at least one earlier milking session of each respective teat of the animal, associated with an identity reference of the animal and/ or possibly also with a time reference. The stored data may for example comprise milk extraction per time unit for each teat during a milking session and/ or vacuum level/ vacuum profile to be maintained during the milking session.

The milking session may be regarded as beginning when a pre-treatment is performed on the first teat of the animal, which starts stimulation of oxytocin release of the animal. The pre-treatment may comprise cleaning of the teat, by rinsing the teat with water, treating the teat with a brush or otherwise teasing/ stimulating the teat. The required time-period from the start of the pre-treatment to release of alveoli milk may be about 40-60 seconds; however, this time may be different for different breeds, different individual animals and also for the same animal in different situations and may be regarded as merely a rough estimation.

However, pre-treatment may not be performed at all farms. In case pre-treatment is not performed, the milking session may be considered to begin when the first teat cup 110a, 110b, 110c, 110d is attached to the first teat.

The vacuum profile may comprise a constant vacuum pressure level under the teat to be maintained during the milking session, in some embodiments. Alternatively, in other embodiments, the vacuum profile may comprise a plurality of vacuum pressure levels under the animal teat that varies over time during the milking session.

In addition, the milking system 100 also comprises a processing device 170 which is communicatively connected to the vacuum regulators 150a, 150b, 150c, 150d, the vacuum pressure sensors 160a, 160b, 160c, 160d, an animal identification sensor and the database 180, for instance via a wireless connection based on radio or optical technique, or a wired connection implemented by electric cable or optic fibre.

The vacuum pressure sensor 160a, 160b, 160c, 160d may be configured to measure vacuum pressure level with substantially 10-1000 measurements per second, preferably 100-1000 measurements per second, in some embodiments.

The vacuum pressure sensor 160a, 160b, 160c, 160d may also be configured to measure the vacuum pressure level at least two times during a time period when a liner is open, in yet some embodiments.

The processing device 170 is configured to determine an identity reference of the animal to be milked, based on animal-unique information obtained from the animal identification sensor. The processing device 170 is also configured to extract data of each respective teat of the identified animal from the database 180 based on the determined identity reference. Additionally, the processing device 170 is configured to determine a teat specific vacuum pressure level to be applied at each respective teat at a time-period from beginning of the milking session, when the teat cup 110a, 110b, 110c, 110d is attached to the respective teat, based on the extracted data. The processing device 170 is also configured to generate a respective command to each vacuum regulator 150a, 150b, 150c, 150d, to set the determined teat specific vacuum pressure level at each respective associated teat cup 110a, 110b, 110c, 110d.

In some embodiments, the processing device 170 may also be configured to determine a vacuum profile to be applied to each respective teat of the animal during the milking session, based on the extracted data. Also, the processing device 170 may be configured to generate a respective command to each vacuum regulator 150a, 150b, 150c, 150d, to control the respective vacuum pressure level prevailing at each associated teat cup 110a, 110b, 110c, 110d under the teat, according to the corresponding vacuum profile of the respective teat.

The milking system 100 may also in some embodiments comprise a communication device 190 for communication with a central processing device 192 of a service provider. The central processing device 192 may in turn be connected to a central database 193 wherein various related data may be stored.

The processing device 170 at the farm may be configured to provide data of the animal and/ or the identity reference of the animal to the central processing device 192 of the service provider via the communication device 190. The vacuum profile to be applied for each respective teat of the animal during the milking session may be obtained from the central processing device 192.

The processing device 170 may in yet some embodiments be configured to obtain continuously a respective vacuum pressure level under each of the teats, from the corresponding vacuum pressure sensor 160a, 160b, 160c, 160d, during the milking session. Also, the processing device 170 may be configured to compare the obtained respective vacuum pressure levels with the respective vacuum profile. A direct, real time (or almost real time) control of vacuum pressure levels under the teat is enabled. In case the obtained vacuum pressure level differs from the vacuum pressure level of the vacuum profile, the processing device 170 may generate a respective command to each vacuum regulator 150a, 150b, 150c, 150d, to adjust the respective vacuum pressure level at each associated teat cup 110a, 110b, 110c, 110d, according to the corresponding vacuum profile of the respective teat.

In some embodiments, the processing device 170 may be configured to calculate a rolling average of vacuum pressure levels prevailing at each teat cup 110a, 110b, 110c, 110d under the teat 210a, 210b, 210c, 210d, based on a predetermined number of latest vacuum pressure levels obtained from the respective associated vacuum pressure sensor 160a, 160b, 160c, 160d, such as the five latest measurements, ten latest measurements, etc. Also, the processing device 170 may be configured to perform the comparison with the vacuum profile based on the calculated rolling average of vacuum pressure levels for each respective teat 210a, 210b, 210c, 210d. Hereby, deviations in measurement results due to arbitrary fluctuations in measurement results is evened out, leading to more reliable measurements of vacuum pressure levels under the teat.

The processing device 170 may be configured to repeatedly generate a command to the vacuum regulator 150a, 150b, 150c, 150d associated with the teat cup 110a, 110b, 110c, 110d attached to the teat, to adjust the vacuum pressure level under the teat. The adjustment may comprise increasing the vacuum pressure level under the teat with a step when the latest obtained vacuum pressure level under the teat, obtained from the vacuum pressure sensor 160a, 160b, 160c, 160d is lower than a previously obtained vacuum pressure level under the teat, i.e., that the vacuum pressure level under the teat is decreasing. The previously obtained vacuum pressure level may for example be the penultima obtained vacuum pressure level, or alternatively an earlier made measurement.

Also, or alternatively, the adjustment may comprise decreasing the vacuum pressure level under the teat with the step when the latest obtained vacuum pressure level under the teat, obtained from the vacuum pressure sensor 160a, 160b, 160c, 160d exceeds the previously obtained vacuum pressure level under the teat.

In some embodiments, the size of the step may be proportional to a difference between the latest obtained vacuum pressure level and the previously obtained vacuum pressure level.

Thus, a detected large difference between two subsequent measurements of the vacuum pressure level under the teat may trigger a large adjustment via the vacuum regulator, of the applied vacuum pressure level under the teat, and vice versa.

The processing device 170 may in some embodiments be configured to detect that the vacuum pressure level under one of the teats exceeds a maximum allowed vacuum pressure level, based on a measurement of the vacuum pressure level obtained from the vacuum pressure sensor 160a, 160b, 160c, 160d associated with the teat cup 110a, 110b, 110c, 110d attached to the teat. The processing device 170 may then be configured to generate a command to the vacuum regulator 150a, 150b, 150c, 150d associated with the teat cup 110a, 110b, 110c, 110d attached to the teat, to decrease the vacuum pressure level under the teat.

The maximum allowed vacuum pressure level may be set to for example 38 kPa, 42 kPa, etc. The maximum allowed vacuum pressure level may be set differently for different teats. It is thereby ascertained that the teats are not harmed due to excess vacuum pressure.

In some embodiments, the processing device 170 may also be configured to provide data related to the latest milking session of each respective teat of the identified animal, to the database 180, for storage therein, associated with the specific teat, the identity reference of the animal and a time reference.

The processing device 170 may in some embodiments be configured to detect a difference between previously stored data related to milking sessions of one teat of the animal and milk flow data of the latest milking session of the teat exceeding a threshold limit, such as for example 10%, 20% or similar. The processing device 170 may then be configured to generate an alert to be output when the difference is detected.

The alert may for example be output on a mobile telephone, computer, and/ or a wearable electronic device of the farmer, such as an intelligent watch and/ or intelligent glasses or similar device. The alert may also, or alternatively be output on a loudspeaker and/ or display arranged at the farm.

The processing device 170 is with general advantage configured to perform the above-described procedure in an automatic manner by executing a computer program. Therefore, according to some embodiment, the processing device 170 may comprise a memory unit, i.e., non-volatile data carrier, storing the computer program, which, in turn, may contain software for making a processing circuitry in the form of at least one processor in the processing device 170 to execute the above-described actions when the computer program is run on the processing circuitry.

In some embodiments, the processing device 170 is configured to determine a time period between the last milking session of the animal and the current moment in time when the animal is about to commence the subsequent milking session. The moment in time of the last milking session for the particular animal may be stored in the database 180, associated with the identity reference of the animal.

In case the time period is longer than expected, for example 20% longer, it may be expected that the animal has produced more milk than otherwise, which may influence the shape of the milking curve. It may also influence the amount/ time of pre-stimulation required for the respective teats of the animal and/ or the level of the milk flow per time unit for the teat. Thus, an extended time period (in comparison with an average time period) may render an increased teat specific vacuum pressure level to be applied at each respective teat and/ or vacuum profile and vice versa. The adjustment of the teat specific vacuum pressure level and/ or vacuum profile may be made with regard to the size of the deviation between the determined time period and the average time period in some embodiments, leading to a better correspondence between the applied vacuum pressure level at the teat and the milk flow of the teat.

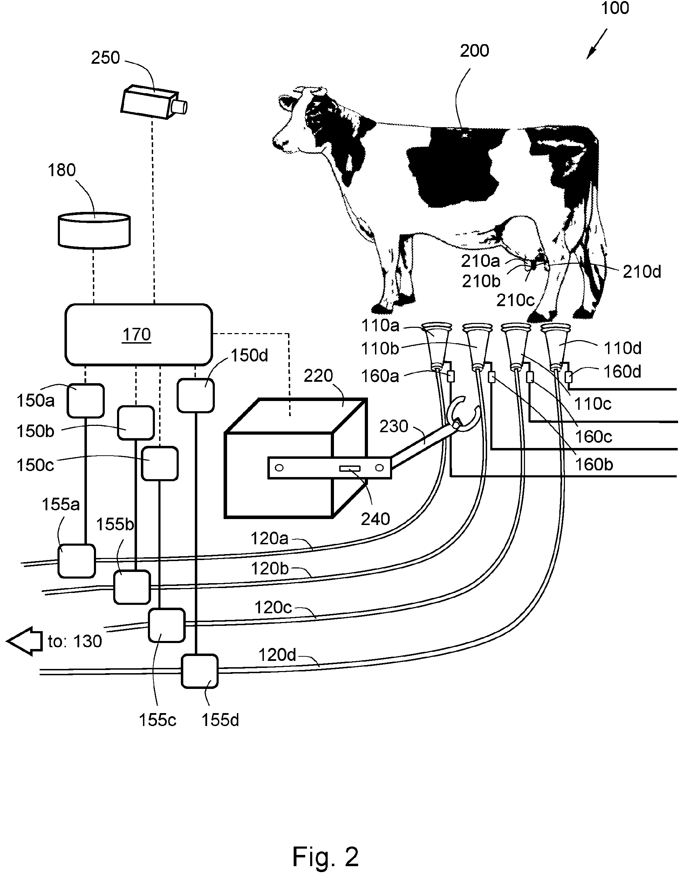

Figure 2 illustrates a milking system 100 comprising a teat cup placing device 220 such as a milking robot comprising a robotic arm 230, communicatively connected to a sensor 240, such as a camera, video camera, lidar, radar, infrared camera, etc. The sensor 240 is configured to detect position of each teat 210a, 210b, 210c, 210d of an animal 200 to be milked.

In the illustrated non-limiting embodiment, teat cup placing device 220 is embodied as a milking robot, which may be part of an Automatic Milking System (AMS), sometimes also referred to as a Voluntary Milking System (VMS), or similar system. The herein disclosed methodology and milking system 100 is not limited to usage involving a milking robot but may be utilised together with any commonly known milking concept such as tied-up animals in a milking parlour and/ or manual milking in a milking pit or a rotary milking parlour.

The teat cup placing device 220 may be communicatively connected to the sensor 240, via a wired or wireless connection, thereby obtaining information concerning the respective position of the animal teat 210a, 210b, 210c, 210d. The teat cup placing device 220 may be configured to sequentially attach each of the teat cups 110a, 110b, 110c, 110d onto the respective teat 210a, 210b, 210c, 210d of the animal 200, based on sensor detections made by the sensor 240. The teat cups 110a, 110b, 110c, 110d may be kept in a storage magazine or similar storage zone, where the teat cup placing device 220 may pick it up one at the time and attach it onto one of the teats 210a, 210b, 210c, 210d and repeat this until all teat cups 110a, 110b, 110c, 110d have been attached. The teat cups 110a, 110b, 110c, 110d may be attached onto the teats 210a, 210b, 210c, 210d in the same sequential order each time of every milking session.

Often the rear teats may provide more milk than the front teats. The milk flow of the rear teats may thus be higher than the milk flow of the front teats. In some embodiments, the teat cups 110a, 110b, 110c, 110d may be attached firstly to the rear teats before they are attached to the front teats, as milking out the rear teats may take longer time than milking out the front teats.

Thereby, the overall time for the milking session is reduced, leading to a higher throughput of animals 200 served by the milking system 100; i.e. more animals 200 may be served by the milking system 100, which improves profitability of the farm.

The data concerning the milk extraction curve and/ or vacuum profile (or teat specific vacuum pressure level) of each teat 210a, 210b, 210c, 210d of each individual animal 200 at the farm may be stored in, for example a digital memory or database 180, communicatively connected to, or comprised in the processing device 170, and later retrieved therefrom. Alternatively, or in addition, the data may be stored in a central database 193, where it may be accessed by a central processing device 192.

The database 180, 193 may store historical milk extraction data and/ or vacuum profile and/ or vacuum pressure level of teats 210a, 210b, 210c, 210d of animals 200 at the farm, associated with an identity reference of the particular animal 200.

The processing device 170 is connected to an animal identifying device 250, such as for example a camera that in conjunction with an image recognition program may identify the animal 200, based on an animal-unique skin pattern and/ or visual markings made on the animal 200 such as an animal-unique ID number on an ear tag, an ID number (or other animal-unique marking) on the hide, a bar code comprising the ID number.

Alternatively, in other embodiments, the animal identifying device 250 may be based on a short distance radio wave communication. The identification of the animal 200 may then be made by the animal identifying device 250 in form of a reader or transceiver, obtaining a signal from a Radio-Frequency Identification (RFID) tag associated with the animal 200, for example attached to an ear of the animal 200, carried in a neck lace around the neck of the animal 200, injected under the skin of the animal 200, etc. Instead of RFID, the signalling may be based on Bluetooth, Wi-Fi, Near-Field Communication (NFC), etc.

The signal emitting tag may comprise electronically stored information for uniquely (at least uniquely within the farm) identifying the animal 200.

The animal identifying device 250 may then provide the identity reference of the animal 200, as obtained from the identification device, to the processing device 170, over a wired or wireless communication interface.

When the animal 200 has been identified by the processing device 170 in conjunction with the animal identifying device 250, the robotic arm 230 may start attaching the teat cups 110a, 110b, 110c, 110d on the respective teat 210a, 210b, 210c, 210d, one-by-one. The teat cups 110a, 110b, 110c, 110d may be attached in the same order as discussed above. However, in some alternative embodiments, the teat cups 110a, 110b, 110c, 110d may be attached in another order, for example an arbitrary order.

The processing device 170 is communicationally connected to the database 180, 193. Based on the animal-unique information, an animal identity reference, data/ information for each specific teat 210a, 210b, 210c, 210d of the animal 200 is extracted. The data may comprise milk flow per time unit for each specific teat 210a, 210b, 210c, 210d, and/ or a vacuum profile to be applied for the specific teat 210a, 210b, 210c, 210d, and/ or a teat specific vacuum pressure level to be applied at each respective teat 210a, 210b, 210c, 210d at a time-period from beginning of the milking session, when the teat cup 110a, 110b, 110c, 110d is attached to the respective teat 210a, 210b, 210c, 210d.

For example, the applied teat specific vacuum pressure level may be 32 kPa, 35 kPa, 40 kPa or there about, as measured in the teat cup 110a, 110b, 110c, 110d under the teat 210a, 210b, 210c, 210d by the associated vacuum pressure sensor 160a, 160b, 160c, 160d.

In case the stored data may comprise milk flow per time unit for each specific teat 210a, 210b, 210c, 210d, the processing device 170 is configured to calculate a corresponding vacuum pressure level to be maintained under the teat 210a, 210b, 210c, 210d, according to an algorithm.

In some embodiments, the processing device 170 may maintain the teat specific vacuum pressure level prevailing under the teat 210a, 210b, 210c, 210d at a constant level throughout the milking session. As milk is flowing from the teat 210a, 210b, 210c, 210d at different flow rates, also the vacuum pressure level under the teat 210a, 210b, 210c, 210d will vary. In order to maintain the constant vacuum pressure level prevailing under the teat 210a, 210b, 210c, 210d, the applied vacuum pressure level may be adjusted.

The processing device 170 may continuously/ repeatedly measure the vacuum pressure under the teat 210a, 210b, 210c, 210d with the respective associated vacuum pressure sensors 160a, 160b, 160c, 160d. The processing device 170 may then obtain the current/ instantaneous (or almost current/ instantaneous with some insignificant time delay) vacuum pressure under the teat 210a, 210b, 210c, 210d as measured by the associated vacuum pressure sensor 160a, 160b, 160c, 160d. The measured vacuum pressure level may be compared with the vacuum profile and/ or the teat specific vacuum pressure level to maintain constant during the milking session. Based on the outcome of the comparison, the processing device 170 may generate a command to the vacuum regulator 150a, 150b, 150c, 150d associated with the teat cup 110a, 110b, 110c, 110d and the teat 210a, 210b, 210c, 210d, to adjust the vacuum pressure level under the teat 210a, 210b, 210c, 210d and thereby set the vacuum pressure level under the teat 210a, 210b, 210c, 210d to either the vacuum pressure level of the vacuum profile and/ or the teat specific vacuum pressure level to be maintained constantly during the milking session.

A pulsating pressure is applied when the teat cups 110a, 110b, 110c, 110d have been attached on the animal teats 210a, 210b, 210c, 210d. The pulsating pressure levels applied to a pulsation chamber via a pulse tube in the teat cup 110a, 110b, 110c, 110d may in some embodiments vary between atmospheric pressure during the rest phase D, and system vacuum pressure during the milking phase B in some embodiments. The arrangements for applying pulsating vacuum is not illustrated in the drawings.

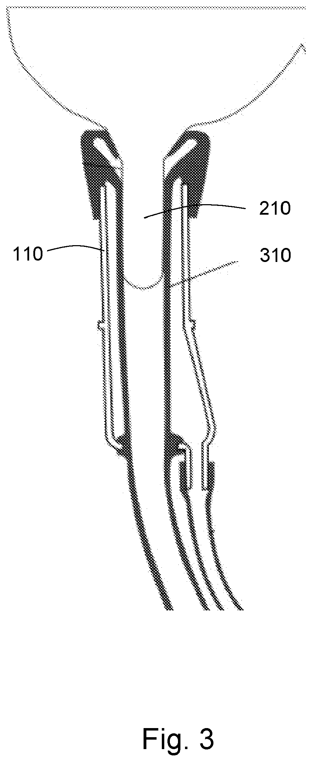

Thus, sucking is interrupted by rhythmical repeated motions, opening and closing, of a liner 310 in the teat cup 110a, 110b, 110c, 110d, as illustrated in Figure 3. The force exerted by the collapsed liner causes a massage to the teat 210a, 210b, 210c, 210d. Consequently, the teats 210a, 210b, 210c, 210d are exposed to massage and congestion (e.g. of blood) in the teat end is prevented while oxytocin release and milk ejection is stimulated by the rhythmical movements of the collapsing and opening liner 310 in combination with the applied milking vacuum, mimicking calf suckling.

It is desired to extract the milk of the animal 200 efficiently, during as short time as possible (to allow for more animals per time unit to be served by the milking system 100), without harming or hurting the teats 210a, 210b, 210c, 210d by applying an excessive vacuum level under the teat 210a, 210b, 210c, 210d.

Thanks to the disclosed concept, a methodology has been developed towards a teat specific adaptation of milk-flow controlled milking, which is efficient, yet conserving teat integrity.

Thus, the milk extraction can be made more efficient, as the applied vacuum pressure level under each teat 210a, 210b, 210c, 210d may be different. Thereby, the applied vacuum pressure level under each teat 210a, 210b, 210c, 210d may be optimised with respect to the capacity of each respective teat 210a, 210b, 210c, 210d, leading to an overall optimisation of the milking session.

When the milking session is about to end, a detachment vacuum pressure may be applied to enable smooth teat cup take off, in some embodiments. The detachment vacuum pressure level may be set to approximately 10-20 kPa, such as for example about 15 kPa.

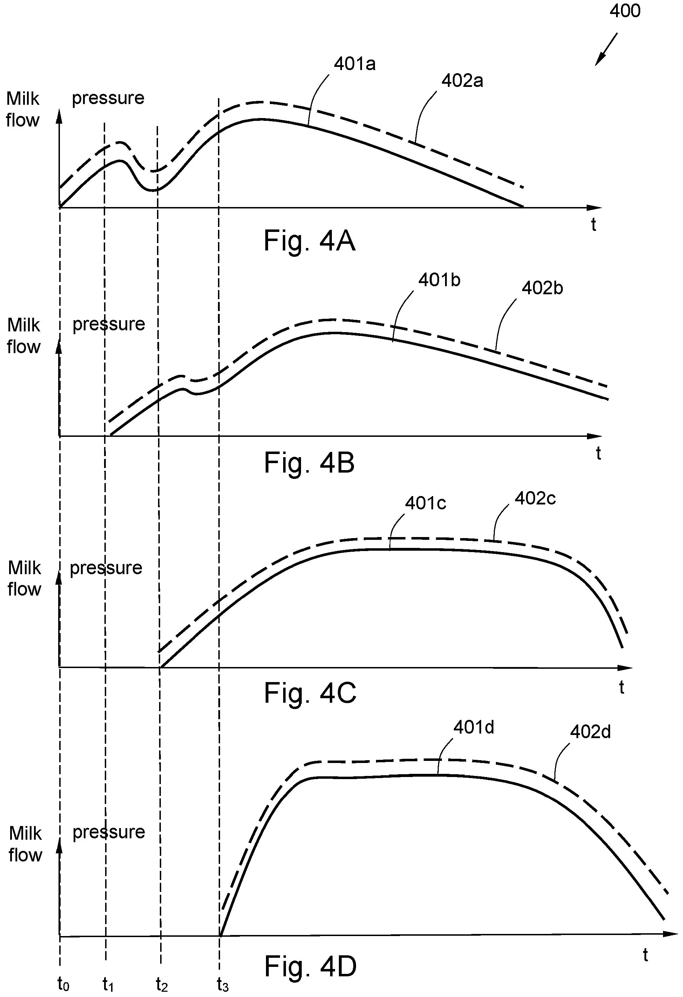

Figures 4A-4D illustrate a respective milk flow curve 401a, 401b, 401c, 401d, and a corresponding vacuum profile 402a, 402b, 402c, 402d of a respective teat 210a, 210b, 210c, 210d of an animal 200 during a milking session 400.

For an animal 200 being milked in a milking robot 220, the teat cups 110a, 110b, 110c, 110d are conventionally attached onto the teats 210a, 210b, 210c, 210d sequentially by a robotic arm 230, leading to that the milk extraction may be in different phases for different teats 210a, 210b, 210c, 210d. for example, when the last teat cup 110a, 110b, 110c, 110d is attached onto the last teat, the alveoli milk may have started to be extracted on the first teat 210a, 210b, 210c, 210d.

The animal 200 in this case has four teats 210a, 210b, 210c, 210d. The four teat cups 110a, 110b, 110c, 110d has been attached sequentially for example by the robotic arm 230 one at the time onto the teats 210a, 210b, 210c, 210d.

Firstly, the first teat cup 110a is attached to the first teat 210a at the moment in time t₀. In case no pre-stimulation has been performed, this point in time t₀ when the first teat cup 110a is attached to the first teat 210a also is the beginning of the milking session 400.

The alveoli milk has not been starting to flow from the first teat 210a, as schematically illustrated in Figure 4A. Instead, cistern milk is extracted from the teat 210a, and when all the cistern milk has been extracted via the teat cup 110a, there may be a dip in the milk flow until the alveoli milk is extracted, as illustrated in the milk flow curve 401a.

In this case, the vacuum profile 402a has been calculated to correspond to the milk flow curve 401a and decrease the vacuum pressure level under the teat 210a when the dip before the alveoli milk has started to flow.

Figure 4B illustrates milk flow curve 401b of the second teat 210b of the animal 200, and the corresponding vacuum profile 402b. The second teat cup 110b may be attached onto the second teat 210b at time point t1. As illustrated in the milk flow curve 401b there may be a brief paus in milk release between the cistern milk evacuation and alveoli milk release of the second teat 210b, which also is mirrored in the corresponding vacuum profile 402b.

Figure 4C illustrates milk flow curve 401c of the third teat 210c of the animal 200, and the corresponding vacuum profile 402c at time point t2. The milk flow curve 401c shows no tendency to dip between cistern milk evacuation and alveoli milk release, why the milk flow of the third teat is fast and firmly raising up to a plateau in the milk flow curve 401c. Towards the end of the milking session, the milk flow is decreasing rather fast.

Figure 4D illustrates milk flow curve 401d of the fourth teat 210d of the animal 200, and the corresponding vacuum profile 402d at time point t3. The milk flow of the fourth teat 210d is rising fast up to a plateau in the milk flow curve 401d.

Thanks to the provided solution, it is possible to dynamically adjust the vacuum pressure level prevailing under each respective teat 210a, 210b, 210c, 210d of the animal 200, depending on the current milk flow per time unit, so that an appropriate vacuum pressure level is applied to each teat 210a, 210b, 210c, 210d. Thereby the milking efficiency is improved, while eliminating or at least reducing teat damages due to excessive vacuum pressure. It is thereby estimated that teat condition of the animal 200 is increased, although more animals per time unit could be milked by the milking system 100 due to the shortened milking time per animal.

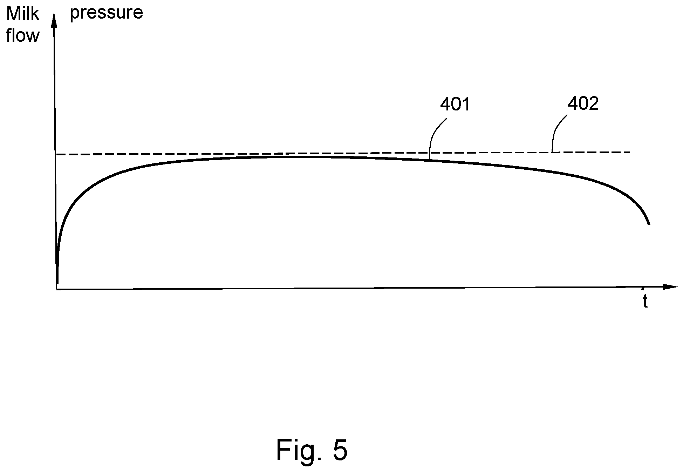

Figure 5 illustrates yet an example of a milk flow curve 401 of a teat 210a, 210b, 210c, 210d of the animal 200. In the illustrated embodiment, a vacuum profile 402 to be applied to the teat 210a, 210b, 210c, 210d comprises a constant vacuum pressure level under the teat 210a, 210b, 210c, 210d to be maintained during the milking session.

The terminology used in the description of the embodiments as illustrated in the accompanying drawings is not intended to be limiting of the described milking system 100; processing device 170 and/ or computer program. Various changes, substitutions and/ or alterations may be made, without departing from invention embodiments as defined by the appended claims.

The various illustrated embodiments depicted in Figures 1-5, and/ or discussed in the corresponding respective section of the description may with advantage be combined with each other, for example by mixing and compiling features of some or all of the described embodiments, thereby achieving additional advantages.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof.

## Claims

1. A milking system (100), comprising:
a plurality of teat cups (110a, 110b, 110c, 110d), each configured to fit on a respective teat (210a, 210b, 210c, 210d) of an animal (200) during milk extraction in a milking session (400);
a plurality of milk evacuation tubes (120a, 120b, 120c, 120d), wherein each milk evacuation tube (120a, 120b, 120c, 120d) is connected to a respective teat cup (110a, 110b, 110c, 110d);
a vacuum pump (140), configured to generate a vacuum pressure;
a milk tank (130), connected to each of the teat cups (110a, 110b, 110c, 110d) via the respective connected milk evacuation tube (120a, 120b, 120c, 120d), and also connected to the vacuum pump (140);
a plurality of vacuum regulators (150a, 150b, 150c, 150d), wherein each vacuum regulator (150a, 150b, 150c, 150d) is associated with one teat cup (110a, 110b, 110c, 110d), and configured to control a vacuum pressure level prevailing in the associated teat cup (110a, 110b, 110c, 110d) under the teat (210a, 210b, 210c, 210d);
a plurality of vacuum pressure sensors (160a, 160b, 160c, 160d) wherein each vacuum pressure sensor (160a, 160b, 160c, 160d) is associated with one teat cup (110a, 110b, 110c, 110d) and configured to measure vacuum pressure level prevailing in the associated teat cup (110a, 110b, 110c, 110d) under one of the teats (210a, 210b, 210c, 210d) during milk extraction of the milking session (400);
an animal identification sensor (250) configured to capture animal-unique information of the animal (200);
a database (180) configured to store data related to at least one earlier milking session (400) of each respective teat (210a, 210b, 210c, 210d) of the animal (200), associated with an identity reference of the animal (200);
a processing device (170) communicatively connected to the vacuum regulators (150a, 150b, 150c, 150d), the vacuum pressure sensors (160a, 160b, 160c, 160d), the animal identification sensor (250) and the database (180), which processing device (170) is configured to:
determine the identity reference of the animal (200) to be milked, based on animal-unique information obtained from the animal identification sensor (250);
extract data of each respective teat (210a, 210b, 210c, 210d) of the identified animal (200) from the database (180) based on the determined identity reference;
determine a teat specific vacuum pressure level to be applied at each respective teat (210a, 210b, 210c, 210d) at a time-period from beginning of the milking session (400), when the teat cup (110a, 110b, 110c, 110d) is attached to the respective teat (210a, 210b, 210c, 210d), based on the extracted data; and
generate a respective command to each vacuum regulator (150a, 150b, 150c, 150d), to set the determined teat specific vacuum pressure level at each respective associated teat cup (110a, 110b, 110c, 110d), **characterized in that** the processing device (170) is further configured to:
determine a vacuum profile (402a, 402b, 402c, 402d) to be applied to each respective teat (210a, 210b, 210c, 210d) of the animal (200) during the milking session (400), based on the extracted data; and
generate a respective command to each vacuum regulator (150a, 150b, 150c, 150d), to control the respective vacuum pressure level prevailing at each associated teat cup (110a, 110b, 110c, 110d) under the teat (210a, 210b, 210c, 210d), according to the corresponding vacuum profile (402a, 402b, 402c, 402d) of the respective teat (210a, 210b, 210c, 210d), wherein the vacuum profile (402a, 402b, 402c, 402d) comprises vacuum pressure levels under the teat (210a, 210b, 210c, 210d) which varies over time during the milking session (400).

2. The milking system (100) according to claim 1, wherein the milking session begins either when a pre-treatment is performed on the first teat (210a, 210b, 210c, 210d), or when the first teat cup (110a, 110b, 110c, 110d) is attached to the first teat (210a, 210b, 210c, 210d).

3. The milking system (100) according to any one of claims 1 or 2, comprising a communication device (190) for communication with a central processing device (192) of a service provider; and the processing device (170) is configured to:
provide data of the animal (200) and/ or the identity reference of the animal (200) to the central processing device (192) of the service provider via the communication device (190); and
obtain the vacuum profile (402a, 402b, 402c, 402d) to be applied for each respective teat (210a, 210b, 210c, 210d) of the animal (200) during the milking session (400), from the central processing device (192).

4. The milking system (100) according to any one of claims 1-3, wherein the processing device (170) is configured to:
obtain, continuously, a respective vacuum pressure level under each of the teats (210a, 210b, 210c, 210d), from the corresponding vacuum pressure sensor (160a, 160b, 160c, 160d), during the milking session (400);
compare the obtained respective vacuum pressure levels with the respective vacuum profile (402a, 402b, 402c, 402d); and
if the obtained vacuum pressure level differs from the vacuum pressure level of the vacuum profile (402a, 402b, 402c, 402d):
generate a respective command to each vacuum regulator (150a, 150b, 150c, 150d), to adjust the respective vacuum pressure level at each teat cup (110a, 110b, 110c, 110d), according to the corresponding vacuum profile (402a, 402b, 402c, 402d) of the respective teat (210a, 210b, 210c, 210d).

5. The milking system (100) according to claim 4, wherein the teat cup (110a, 110b, 110c, 110d) comprises a liner (310), which is caused to open and close repeatedly under the teat (210a, 210b, 210c, 210d) during the milking session; and wherein the vacuum pressure sensor (160a, 160b, 160c, 160d) is configured to measure the vacuum pressure level at least two times during a time period when the liner (310) is open.

6. The milking system (100) according to any one of claim 4 or claim 5, wherein the vacuum pressure sensor (160a, 160b, 160c, 160d) is configured to measure the vacuum pressure level with substantially 10-1000 measurements per second, preferably 100-1000 measurements per second.

7. The milking system (100) according to any one of claims 4-6, wherein the processing device (170) is configured to:
calculate a rolling average of vacuum pressure levels prevailing at each teat cup (110a, 110b, 110c, 110d) under the respective teat (210a, 210b, 210c, 210d), based on a predetermined number of latest vacuum pressure levels obtained from the respectively associated vacuum pressure sensor (160a, 160b, 160c, 160d); and wherein
the comparison with the vacuum profile (402a, 402b, 402c, 402d) is made with the calculated rolling average of vacuum pressure levels.

8. The milking system (100) according to any one of claims 1-7, wherein the processing device (170) is configured to:
detect that the vacuum pressure level under one of the teats (210a, 210b, 210c, 210d) exceeds a maximum allowed vacuum pressure level, based on a measurement of the vacuum pressure level obtained from the vacuum pressure sensor (160a, 160b, 160c, 160d) associated with the teat cup (110a, 110b, 110c, 110d) attached to the teat (210a, 210b, 210c, 210d); and
generate a command to the vacuum regulator (150a, 150b, 150c, 150d) associated with the teat cup (110a, 110b, 110c, 110d) attached to the teat (210a, 210b, 210c, 210d), to decrease the vacuum pressure level under the teat (210a, 210b, 210c, 210d).

9. The milking system (100) according to any one of claims 1-8, wherein the processing device (170) is configured to:
provide data related to the latest milking session (400) of each respective teat (210a, 210b, 210c, 210d) of the identified animal (200), to the database (180), for storage therein, associated with the specific teat (210a, 210b, 210c, 210d), the identity reference of the animal (200) and a time reference.

10. The milking system (100) according to any one of claims 1-9, wherein the processing device (170) is configured to:
detect a difference between previously stored data related to at least one milking session (400) of one teat (210a, 210b, 210c, 210d) of the animal (200) and corresponding data related to the latest milking session (400) of the teat (210a, 210b, 210c, 210d) exceeding a threshold limit; and
generate an alert to be output when the difference is detected.

11. The milking system (100) according to any one of claims 1-10, wherein the processing device (170) is configured to:
determine a time period between the last milking session (400) of the animal (200) and the current moment in time when the animal (200) is about to commence the subsequent milking session (400); and
determine the teat specific vacuum pressure level to be applied at each respective teat (210a, 210b, 210c, 210d) based on the determined time period.

## Patentansprüche

1. Melksystem (100), umfassend:
eine Vielzahl von Zitzenbechern (110a, 110b, 110c, 110d), die jeweils konfiguriert sind, um während einer Milchextraktion in einer Melksitzung (400) auf eine jeweilige Zitze (210a, 210b, 210c, 210d) eines Tiers (200) zu passen;
eine Vielzahl von Milchabsaugschläuchen (120a, 120b, 120c, 120d), wobei jeder Milchabsaugschlauch (120a, 120b, 120c, 120d) mit einem jeweiligen Zitzenbecher (110a, 120b, 120c, 120d) verbunden ist;
eine Vakuumpumpe (140), die konfiguriert ist, um einen Vakuumdruck zu erzeugen;
einen Milchtank (130), der über den jeweiligen Milchabsaugschlauch (120a, 120b, 120c, 120d) mit jedem der Zitzenbecher (110a, 110b, 110c, 110d) verbunden ist und ebenso mit der Vakuumpumpe (140) verbunden ist;
eine Vielzahl von Vakuumreglern (150a, 150b, 150c, 150d), wobei jeder Vakuumregler (150a, 150b, 150c, 150d) einem Zitzenbecher (110a, 110b, 110c, 110d) zugeordnet ist und ausgelegt ist, um einen in dem zugeordneten Zitzenbecher (110a, 110b, 110c, 110d) unter der Zitze (210a, 210b, 210c, 210d) herrschenden Vakuumdruckpegel zu steuern;
eine Vielzahl von Vakuumdrucksensoren (160a, 160b, 160c, 160d), wobei jeder Vakuumdrucksensor (160a, 160b, 160c, 160d) einem Zitzenbecher (110a, 110b, 110c, 110d) zugeordnet ist und konfiguriert ist, um den in dem zugeordneten Zitzenbecher (110a, 110b, 110c, 110d) unter einer der Zitzen (210a, 210b, 210c, 210d) während der Milchgewinnung der Melksitzung (400) herrschenden Vakuumdruckpegel zu messen;
einen Tieridentifikationssensor (250), der konfiguriert ist, um tierspezifische Informationen des Tieres (200) zu erfassen;
eine Datenbank (180), die konfiguriert ist, um Daten zu speichern, die sich auf mindestens eine frühere Melksitzung (400) jeder jeweiligen Zitze (210a, 210b, 210c, 210d) des Tieres (200) beziehen, die mit einer Identitätsreferenz des Tieres (200) verknüpft sind;
eine Verarbeitungsvorrichtung (170), die kommunikativ mit den Vakuumreglern (150a, 150b, 150c, 150d), den Vakuumdrucksensoren (160a, 160b, 160c, 160d), dem Tieridentifikationssensor (250) und der Datenbank (180) verbunden ist, wobei die Verarbeitungsvorrichtung (170) konfiguriert ist zum:
Bestimmen der Identitätsreferenz des zu melkenden Tieres (200) basierend auf tierspezifischen Informationen bestimmen, die von dem Tieridentifikationssensor (250) erhalten werden;
Extrahieren von Daten jeder jeweiligen Zitze (210a, 210b, 210c, 210d) des identifizierten Tieres (200) aus der Datenbank (180) basierend auf der bestimmten Identitätsreferenz;
Bestimmen eines zitzenspezifischen Vakuumdruckpegels, der an jeder jeweiligen Zitze (210a, 210b, 210c, 210d) zu einer Zeitspanne vom Beginn der Melksitzung (400) an anzulegen ist, wenn der Zitzenbecher (110a, 110b, 110c, 110d) an der jeweiligen Zitze (210a, 210b, 210c, 210d) angebracht ist, basierend auf den extrahierten Daten; und
Erzeugen eines jeweiligen Befehls an jeden Vakuumregler (150a, 150b, 150c, 150d), um den bestimmten zitzenspezifischen Vakuumdruckpegel an jedem jeweiligen zugeordneten Zitzenbecher (110a, 110b, 110c, 110d) einzustellen, **dadurch gekennzeichnet, dass** die Verarbeitungsvorrichtung (170) ferner konfiguriert ist zum:
Bestimmen eines Vakuumprofils (402a, 402b, 402c, 402d), das während der Melksitzung (400) auf jede jeweilige Zitze (210a, 210b, 210c, 210d) des Tieres (200) anzuwenden ist, basierend auf den extrahierten Daten; und
Erzeugen eines jeweiligen Befehls an jeden Vakuumregler (150a, 150b, 150c, 150d), um den jeweiligen Vakuumdruckpegel zu steuern, der an jedem zugehörigen Zitzenbecher (110a, 110b, 110c, 110d) unter der Zitze (210a, 210b, 210c, 210d) herrscht, gemäß dem entsprechenden Vakuumprofil (402a, 402b, 402c, 402d) der jeweiligen Zitze (210a, 210b, 210c, 210d), wobei das Vakuumprofil (402a, 402b, 402c, 402d) Vakuumdruckpegel unter der Zitze (210a, 210b, 210c, 210d) umfasst, die im Laufe der Zeit während der Melksitzung (400) variieren.

2. Melksystem (100) nach Anspruch 1, wobei die Melksitzung entweder beginnt, wenn eine Vorbehandlung an der ersten Zitze (210a, 210b, 210c, 210d) durchgeführt wird, oder wenn der erste Zitzenbecher (110a, 110b, 110c, 110d) an der ersten Zitze (210a, 210b, 210c, 210d) angebracht wird.

3. Melksystem (100) nach einem der Ansprüche 1 oder 2, umfassend eine Kommunikationsvorrichtung (190) zur Kommunikation mit einer zentralen Verarbeitungsvorrichtung (192) eines Dienstleisters; und wobei der Verarbeitungsvorrichtung (170) konfiguriert ist zum:
Bereitstellen von Daten des Tieres (200) und/oder der Identitätsreferenz des Tieres (200) an die zentrale Verarbeitungsvorrichtung (192) des Dienstleisters über die Kommunikationsvorrichtung (190); und
Erhalten des Vakuumprofils (402a, 402b, 402c, 402d), das für jede jeweilige Zitze (210a, 210b, 210c, 210d) des Tieres (200) während der Melksitzung (400) anzuwenden ist, von der zentralen Verarbeitungsvorrichtung (192).

4. Melksystem (100) nach einem der Ansprüche 1 bis 3, wobei die Verarbeitungsvorrichtung (170) konfiguriert ist zum:
kontinuierlichen Erhalten eines jeweiligen Vakuumdruckpegels unter jeder der Zitzen (210a, 210b, 210c, 210d) von dem entsprechenden Vakuumdrucksensor (160a, 160b, 160c, 160d) während der Melksitzung (400);
Vergleichen der erhaltenen jeweiligen Vakuumdruckpegel mit dem jeweiligen Vakuumprofil (402a, 402b, 402c, 402d); und
wenn sich der erhaltene Vakuumdruckpegel von dem Vakuumdruckpegel des Vakuumprofils (402a, 402b, 402c, 402d) unterscheidet:
Erzeugen eines jeweiligen Befehls an jeden Vakuumregler (150a, 150b, 150c, 150d), um den jeweiligen Vakuumdruckpegel an jedem Zitzenbecher (110a, 110b, 110c, 110d) gemäß dem entsprechenden Vakuumprofil (402a, 402b, 402c, 402d) der jeweiligen Zitze (210a, 210b, 210c, 210d) anzupassen.

5. Melksystem (100) nach Anspruch 4, wobei der Zitzenbecher (110a, 110b, 110c, 110d) eine Einlage (310) umfasst, die veranlasst wird, sich während der Melksitzung unter der Zitze (210a, 210b, 210c, 210d) wiederholt zu öffnen und zu schließen; und wobei der Vakuumdrucksensor (160a, 160b, 160c, 160d) konfiguriert ist, um den Vakuumdruckpegel mindestens zweimal während einer Zeitspanne zu messen, wenn die Einlage (310) offen ist.

6. Melksystem (100) nach einem der Ansprüche 4 oder 5, wobei der Vakuumdrucksensor (160a, 160b, 160c, 160d) konfiguriert ist, um den Vakuumdruckpegel mit im Wesentlichen 10-1000 Messungen pro Sekunde zu messen, vorzugsweise 100-1000 Messungen pro Sekunde.

7. Melksystem (100) nach einem der Ansprüche 4 bis 6, wobei die Verarbeitungsvorrichtung (170) konfiguriert ist zum:
Berechnen eines gleitenden Durchschnittswert von Vakuumdruckpegeln, die an jedem Zitzenbecher (110a, 110b, 110c, 110d) unter der jeweiligen Zitze (210a, 210b, 210c, 210d) vorherrschen, basierend auf einer vorbestimmten Anzahl von neuesten Vakuumdruckpegeln, die von dem jeweils zugeordneten Vakuumdrucksensor (160a, 160b, 160c, 160d) erhalten werden; und wobei
der Vergleich mit dem Vakuumprofil (402a, 402b, 402c, 402d) mit dem berechneten gleitenden Durchschnittswert der Vakuumdruckpegel durchgeführt wird.

8. Melksystem (100) nach einem der Ansprüche 1 bis 7, wobei die Verarbeitungsvorrichtung (170) konfiguriert ist zum:
Erfassen, dass der Vakuumdruckpegel unter einer der Zitzen (210a, 210b, 210c, 210d) einen maximal zulässigen Vakuumdruckpegel überschreitet, basierend auf einer Messung des Vakuumdruckpegels, die von dem Vakuumdrucksensor (160a, 160b, 160c, 160d) erhalten wird, der dem an der Zitze (210a, 210b, 210c, 210d) befestigten Zitzenbecher (110a, 110b, 110c, 110d) zugeordnet ist; und
Erzeugen eines Befehls an den Vakuumregler (150a, 150b, 150c, 150d), der dem Zitzenbecher (110a, 110b, 110c, 110d) zugeordnet ist, welcher an der Zitze (210a, 210b, 210c, 210d) angebracht ist, um den Vakuumdruckpegel unter der Zitze (210a, 210b, 210c, 210d) zu verringern.

9. Melksystem (100) nach einem der Ansprüche 1 bis 8, wobei die Verarbeitungsvorrichtung (170) konfiguriert ist zum:
Bereitstellen von Daten bezüglich der letzten Melksitzung (400) jeder jeweiligen Zitze (210a, 210b, 210c, 210d) des identifizierten Tieres (200) an die Datenbank (180) zur dortigen Speicherung, verknüpft mit der spezifischen Zitze (210a, 210b, 210c, 210d), der Identitätsreferenz des Tieres (200) und einer Zeitreferenz.

10. Melksystem (100) nach einem der Ansprüche 1 bis 9, wobei die Verarbeitungsvorrichtung (170) konfiguriert ist zum:
Erfassen eines Unterschieds zwischen zuvor gespeicherten Daten bezüglich mindestens einer Melksitzung (400) einer Zitze (210a, 210b, 210c, 210d) des Tieres (200) und entsprechenden Daten bezüglich der letzten Melksitzung (400) der Zitze (210a, 210b, 210c, 210d), der einen Schwellenwert überschreitet; und
Erzeugen einer Warnung, die ausgegeben werden soll, wenn der Unterschied erfasst wird.

11. Melksystem (100) nach einem der Ansprüche 1 bis 10, wobei die Verarbeitungsvorrichtung (170) konfiguriert ist zum:
Bestimmen einer Zeitspanne zwischen der letzten Melksitzung (400) des Tieres (200) und dem aktuellen Zeitpunkt, zu dem das Tier (200) im Begriff ist, die nachfolgende Melksitzung (400) zu beginnen; und
Bestimmen des zitzenspezifischen Vakuumdruckpegels, das an jeder jeweiligen Zitze (210a, 210b, 210c, 210d) basierend auf der bestimmten Zeitspanne anzulegen ist.

## Revendications

1. Système de traite (100), comprenant :
une pluralité de gobelets trayeurs (110a, 110b, 110c, 110d), conçus chacun pour s'adapter sur un trayon (210a, 210b, 210c, 210d) respectif d'un animal (200) pendant une extraction de lait dans une session de traite (400) ;
une pluralité de tubes d'évacuation de lait (120a, 120b, 120c, 120d), dans lequel chaque tube d'évacuation de lait (120a, 120b, 120c, 120d) est raccordé à un gobelet trayeur (110a, 110b, 110c, 110d) respectif ;
une pompe à vide (140), conçue pour générer une pression de vide ;
un réservoir de lait (130), raccordé à chacun des gobelets trayeurs (110a, 110b, 110c, 110d) par l'intermédiaire du tube d'évacuation de lait (120a, 120b, 120c, 120d) raccordé respectif, et également raccordé à la pompe à vide (140) ;
une pluralité de régulateurs de vide (150a, 150b, 150c, 150d), dans lequel chaque régulateur de vide (150a, 150b, 150c, 150d) est associé à un gobelet trayeur (110a, 110b, 110c, 110d), et est configuré pour commander un niveau de pression de vide en vigueur dans le gobelet trayeur (110a, 110b, 110c, 110d) associé sous le trayon (210a, 210b, 210c, 210d) ;
une pluralité de capteurs de pression de vide (160a, 160b, 160c, 160d) dans lequel chaque capteur de pression de vide (160a, 160b, 160c, 160d) est associé à un gobelet trayeur (110a, 110b, 110c, 110d) et est configuré pour mesurer un niveau de pression de vide en vigueur dans le gobelet trayeur (110a, 110b, 110c, 110d) associé sous l'un des trayons (210a, 210b, 210c, 210d) pendant une extraction de lait de la session de traite (400) ;
un capteur d'identification d'animal (250) configuré pour capturer des informations propres à l'animal, de l'animal (200) ;
une base de données (180) configurée pour stocker des données apparentées à au moins une session de traite (400) antérieure de chaque trayon (210a, 210b, 210c, 210d) respectif de l'animal (200), associées à une référence d'identité de l'animal (200) ;
un dispositif de traitement (170) connecté par communications aux régulateurs de vide (150a, 150b, 150c, 150d), aux capteurs de pression de vide (160a, 160b, 160c, 160d), au capteur d'identification d'animal (250) et à la base de données (180), ce dispositif de traitement (170) étant configuré pour :
déterminer la référence d'identité de l'animal (200) à traire, en fonction d'informations propres à l'animal, obtenues auprès du capteur d'identification d'animal (250) ;
extraire des données de chaque trayon (210a, 210b, 210c, 210d) respectif de l'animal (200) identifié auprès de la base de données (180) en fonction de la référence d'identité déterminée ;
déterminer un niveau de pression de vide spécifique au trayon, à appliquer au niveau de chaque trayon (210a, 210b, 210c, 210d) respectif pendant un laps de temps à partir du début de la session de traite (400), lorsque le gobelet trayeur (110a, 110b, 110c, 110d) est attaché au trayon (210a, 210b, 210c, 210d) respectif, en fonction des données extraites ; et
générer une instruction respective pour chaque régulateur de vide (150a, 150b, 150c, 150d), pour régler le niveau de pression de vide spécifique au trayon déterminé au niveau de chaque gobelet trayeur (110a, 110b, 110c, 110d) associé respectif, **caractérisé en ce que** le dispositif de traitement (170) est configuré en outre pour :
déterminer un profil de vide (402a, 402b, 402c, 402d) à appliquer à chaque trayon (210a, 210b, 210c, 210d) respectif de l'animal (200) pendant la session de traite (400), en fonction des données extraites ; et
générer une instruction respective pour chaque régulateur de vide (150a, 150b, 150c, 150d), pour commander le niveau de pression de vide respectif en vigueur au niveau de chaque gobelet trayeur (110a, 110b, 110c, 110d) associé sous le trayon (210a, 210b, 210c, 210d), selon le profil de vide (402a, 402b, 402c, 402d) correspondant du trayon (210a, 210b, 210c, 210d) respectif, dans lequel le profil de vide (402a, 402b, 402c, 402d) comprend des niveaux de pression de vide sous le trayon (210a, 210b, 210c, 210d) qui varient au fil du temps pendant la session de traite (400).

2. Système de traite (100) selon la revendication 1, dans lequel la session de traite commence soit lorsqu'un prétraitement est mis en œuvre sur le premier trayon (210a, 210b, 210c, 210d), soit lorsque le premier gobelet trayeur (110a, 110b, 110c, 110d) est attaché au premier trayon (210a, 210b, 210c, 210d).

3. Système de traite (100) selon l'une quelconque des revendications 1 ou 2, comprenant un dispositif de communication (190) destiné à une communication avec un dispositif de traitement central (192) d'un fournisseur de services ; et le dispositif de traitement (170) est configuré pour :
fournir des données de l'animal (200) et/ou la référence d'identité de l'animal (200) au dispositif de traitement central (192) du fournisseur de services par l'intermédiaire du dispositif de communication (190) ; et
obtenir le profil de vide (402a, 402b, 402c, 402d) à appliquer pour chaque trayon (210a, 210b, 210c, 210d) respectif de l'animal (200) pendant la session de traite (400), auprès du dispositif de traitement central (192).

4. Système de traite (100) selon l'une quelconque des revendications 1 à 3, dans lequel le dispositif de traitement (170) est configuré pour :
obtenir, de façon continue, un niveau de pression de vide respectif sous chacun des trayons (210a, 210b, 210c, 210d), auprès du capteur de pression de vide (160a, 160b, 160c, 160d) correspondant, pendant la session de traite (400) ;
comparer les niveaux de pression de vide respectifs obtenus au profil de vide (402a, 402b, 402c, 402d) respectif ; et
si le niveau de pression de vide obtenu diffère du niveau de pression de vide du profil de vide (402a, 402b, 402c, 402d) :
générer une instruction respective pour chaque régulateur de vide (150a, 150b, 150c, 150d), pour ajuster le niveau de pression de vide respectif au niveau de chaque gobelet trayeur (110a, 110b, 110c, 110d), selon le profil de vide (402a, 402b, 402c, 402d) correspondant du trayon (210a, 210b, 210c, 210d) respectif.

5. Système de traite (100) selon la revendication 4, dans lequel le gobelet trayeur (110a, 110b, 110c, 110d) comprend un chemisage (310), qui est amené à s'ouvrir et à se fermer de manière répétée sous le trayon (210a, 210b, 210c, 210d) pendant la session de traite ; et dans lequel le capteur de pression de vide (160a, 160b, 160c, 160d) est configuré pour mesurer le niveau de pression de vide au moins deux fois pendant un laps de temps où le chemisage (310) est ouvert.

6. Système de traite (100) selon l'une quelconque de la revendication 4 ou de la revendication 5, dans lequel le capteur de pression de vide (160a, 160b, 160c, 160d) est configuré pour mesurer le niveau de pression de vide avec sensiblement 10 à 1000 mesures par seconde, de préférence 100 à 1000 mesures par seconde.

7. Système de traite (100) selon l'une quelconque des revendications 4 à 6, dans lequel le dispositif de traitement (170) est configuré pour :
calculer une moyenne mobile de niveaux de pression de vide en vigueur au niveau de chaque gobelet trayeur (110a, 110b, 110c, 110d) sous le trayon (210a, 210b, 210c, 210d) respectif, en fonction d'un nombre prédéterminé de tout derniers niveaux de pression de vide obtenus auprès du capteur de pression de vide (160a, 160b, 160c, 160d) respectivement associé ; et dans lequel
la comparaison au profil de vide (402a, 402b, 402c, 402d) est réalisée avec la moyenne mobile calculée des niveaux de pression de vide.

8. Système de traite (100) selon l'une quelconque des revendications 1 à 7, dans lequel le dispositif de traitement (170) est configuré pour :
détecter que le niveau de pression de vide sous l'un des trayons (210a, 210b, 210c, 210d) dépasse un niveau de pression de vide maximal autorisé, en fonction d'une mesure du niveau de pression de vide obtenue auprès du capteur de pression de vide (160a, 160b, 160c, 160d) associé au gobelet trayeur (110a, 110b, 110c, 110d) attaché au trayon (210a, 210b, 210c, 210d) ; et
générer une instruction pour le régulateur de vide (150a, 150b, 150c, 150d) associé au gobelet trayeur (110a, 110b, 110c, 110d) attaché au trayon (210a, 210b, 210c, 210d), pour diminuer le niveau de pression de vide sous le trayon (210a, 210b, 210c, 210d).

9. Système de traite (100) selon l'une quelconque des revendications 1 à 8, dans lequel le dispositif de traitement (170) est configuré pour :
fournir des données apparentées à la toute dernière session de traite (400) de chaque trayon (210a, 210b, 210c, 210d) respectif de l'animal (200) identifié, à la base de données (180), pour stockage dans celle-ci, associée au trayon (210a, 210b, 210c, 210d) spécifique, à la référence d'identité de l'animal (200) et à une référence temporelle.

10. Système de traite (100) selon l'une quelconque des revendications 1 à 9, dans lequel le dispositif de traitement (170) est configuré pour :
détecter une différence entre des données précédemment stockées apparentées à au moins une session de traite (400) d'un trayon (210a, 210b, 210c, 210d) de l'animal (200) et des données correspondantes apparentées à la toute dernière session de traite (400) du trayon (210a, 210b, 210c, 210d) dépassant une limite seuil ; et
générer une alerte à délivrer en sortie lorsque la différence est détectée.

11. Système de traite (100) selon l'une quelconque des revendications 1 à 10, dans lequel le dispositif de traitement (170) est configuré pour :
déterminer un laps de temps entre la dernière session de traite (400) de l'animal (200) et le moment actuel dans le temps où l'animal (200) est sur le point de commencer la session de traite (400) suivante ; et
déterminer le niveau de pression de vide spécifique au trayon à appliquer à chaque trayon (210a, 210b, 210c, 210d) respectif en fonction du laps de temps déterminé.
